# EUROPEAN PATENT APPLICATION

(11) **EP 1 089 192 A2**
(43) Date of publication of application: **04.04.2001**
(21) Application number: 00203175.5
(22) Date of filing: 13.09.2000
(51) Int. Cl.: G06F 17/21, G06F 17/60

(54) **Computer system for composing a message and message obtained therewith**

(30) Priority: 13.09.1999 US 153266 P
(71) Applicant: Signature Software Inc., Hood River, OR 97031 (US); Print Personal! B.V. i.o., 5623 EX Eindhoven (NL)
(72) Inventor: Derks, Marijke Joke, 3628 TP Eindhoven (NL); van Muylwijk, Egbert, 3628 TP Eindhoven (NL); Spencer, Barry, Hood River, OR 97031 (US); Fenwick, David C., Hood River, OR 97031 (US)
(74) Representative: Prins, Adrianus Willem

(57) **Abstract**

System for creating a message, comprising input means for receiving text type documents comprising characters and font type parameters, output means for outputting graphic documents, and transformation means provided with a memory in which memory is stored glyphs of at least one font type, said transformation means being communicatively connected to said input means and said output means, wherein said transformation means transforms a text type document received from said input means into a graphic document by replacing each character from said text type document by a corresponding glyph of said at least one font type.

## Description

The present invention relates to messages that are generally used in mailing applications such as Internet email, Web Browser and paper printing applications. The messages are recognised and interpreted by these applications so they may be viewed or printed by a recipient.

In this document the following terminology is understood to have at least the following meaning: a *font* is a complete set of characters of one type face; a *glyph* is the displayed form that represents a character within a font; a *text document* is a document containing text characters, wherein at least a position of characters and an indication of the specific character at this position are stored, for example in a table containing a column with the character position in the text and a column with the ASCII code corresponding to the character, a *graphic document* contains information in a bitmap document, a vector defined document or other document with a graphical representation; a *mathematically described* document is a document containing a mathematical description of graphical content; a *vector defined document* contains information about figures and their co-ordinates, for example the pseudo code: circle: radius: 20, co-ordinate centre: x=20, y=20, as is for example implemented in Adobe Postscript and Adobe Portable Document Format (PDF), a vector defined document is a mathematically described graphic document, a *bitmap document* contains information about pixels and their colour, for example in a table containing fields: x co-ordinate, y co-ordinate and colour.

It is generally known to send a message containing a text document to a recipient via a print of the document or email or other digital means. This text document might be styled with a certain font type in order to provide the text document with an aesthetic advantageous appearance. However, the recipient of the message or the printer of the document requires the specific fonts, for example in True Type or Postscript format, used in the text document in order to be able to view the document as intended by the sender of the document. So these fonts have to be included in the message by the sender and installed on the recipients computer or printer. These steps are complicated, time consuming and not trivial for most computer users. Furthermore, inclusion of the font file in the message requires a lot of bytes (between tens to hundreds of kilobytes) compared to the size of the message (typically several kilobytes), thus leading to increased memory use and long transfer times.

Moreover, font types have an economic value, especially if the font is designed for specific purposes. Including the font type in the message provides the receiver of the text document with easy and unrestricted access to the use of the font.

Hand-written style context sensitive fonts as are described in United States patent US 5412711, are expensive in particular. In the mentioned patent a method is described for preparing a message with a hand-written appearance. In this method a font is made from a sample of a persons handwriting. After creating a text document, the characters are then replaced with glyphs depending on the place of the characters in the text. Hereby a hand-written appearance of the document is obtained. The font itself has a high value since the font is custom made for a specific person. Therefore, distributing these fonts to third parties is disadvantageous. Also, these fonts include several version of each character, whereby styling of the document with another font type will not only make the appearance of the document differ from the intention of the sender but also make the text document unreadable for the recipient.

The invention seeks to solve these problems. It is therefore a goal of the invention to provide in a method for creating a message that can be read by a recipient in a font type defined by the sender without the necessity of providing the recipient with the specific fonts used in the text document or the necessity of the specific font being available to the recipient.

To meet these objective the invention provides a method according to claim 1. The content of the message is determined by a text document composed of characters, for example composed by user using a known word processor. Consequently, the document is converted by replacing the characters by respective character of a computer font type, wherein the font can have more than one glyph representation per character and the characters may be in any language. The thus created text document containing strings of character glyphs, is consequently converted into a graphic document, for example a mathematically described defined document or bitmap document. This graphic document contains no font, character, or text information other than what can be interpreted from the graphic picture. The graphic document can be emailed, displayed, printed, and otherwise used as a text document except that functions that require the original text character information can not be performed. Because the transformation means in which the font is stored only give a graphic output from which the font used can not be extracted, the font is protected from unwanted use and/or multiplication.

With the method according to the invention a message can be read by the recipient without the need for access to the font type specified or used by the sender. Furthermore, there is no need for complicated and time consuming installation of font types on the receivers computer system or printer. Also the font type of the sender can be read by the receiver without the receiver being able to gain access to the font type.

Particularly advantageous elaborations of the invention are set forth in the dependent claims. Further objects, elaborations, modifications, effects and details of the invention appear from the following description, in which reference is made to the drawing, in which
fig. 1a shows the appearance of text document using a handwriting styled font prior to being sent to a recipient,
fig. 1b shows the appearance of a graphic document with the same message as in fig. 1a displayed on a recipient's system,
fig. 2a shows the internal representation of the text document of fig. 1a,
fig. 2b shows the internal representation of a low-resolution bitmap type graphic document containing an image of the word "now",
fig. 3 shows a flow chart of an example embodiment of an method according to the invention,
fig. 4 shows a flow chart of an example of preparing a direct mailing according to the invention,
fig. 5 shows a chart of data structures illustrating parameters of the glyphs to be used in the graphic documents created with a method according to the invention,
figs: 6a-c show a flow chart of an example of converting the text document into a graphic type document in more detail.

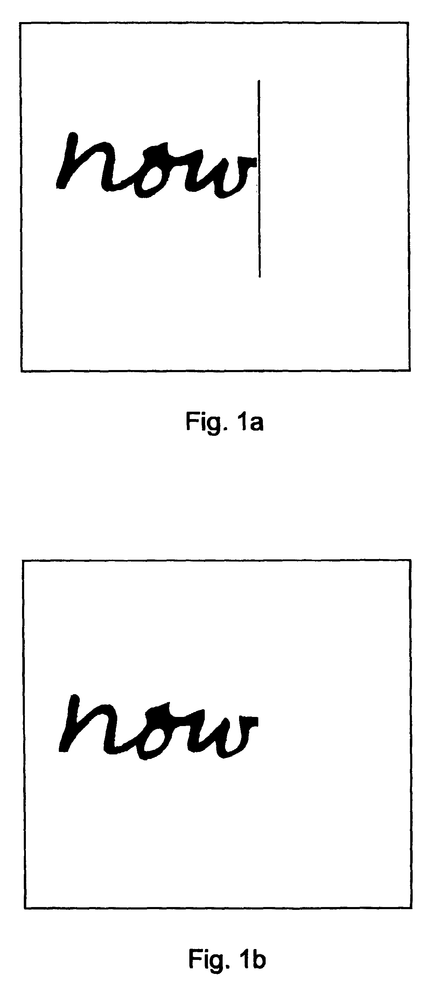

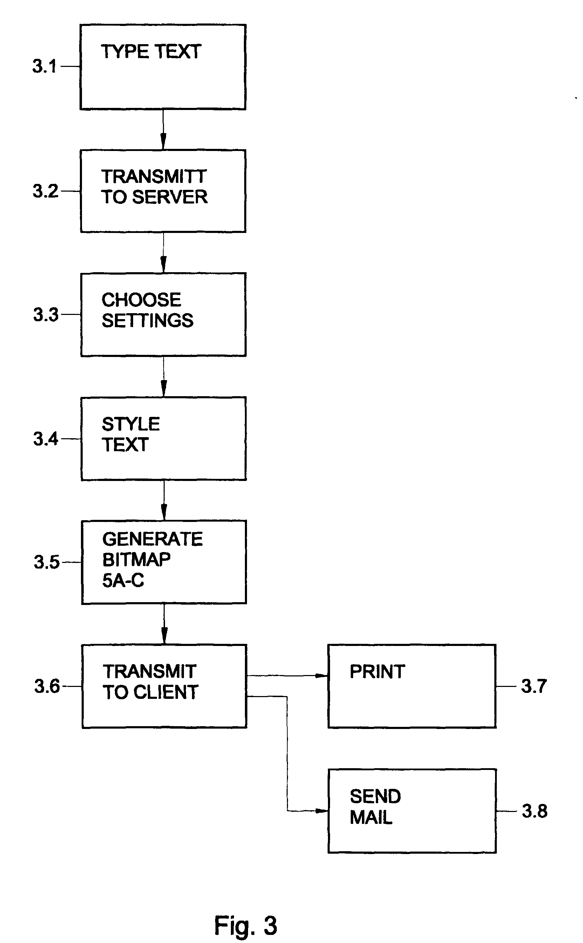

In fig. 3 an example of a method according to the invention is shown. In step 3.1 an user or sender composes a text for a message, like an email of a letter to be printed on paper. According to the invention, message is understood to comprise all messages, in digital or physical form, such as notes, emails, letter, mailings, newsletters and the like. The sender creates his message on a computer system, like a PC, provided with a known word processing application. The sender computer system can be provided with any suitable input means, like a keyboard, a graphics tablet or a stylus as is commonly used in handheld PC's. In the fig. 1a/b an example of a text is shown containing the word "now". The text message may be of any length. The text created on the computer system is in the form of a text document or text file, composed of characters, like for example ASCII characters.

Consequently, the text document is transmitted in step 3.2 to a server computer, for example via an internet connection. The server computer is provided with a software program application according to the invention. This program is implemented to perform a transformation of the text supplied by the sender in a font chosen by the sender. The sender provides the server application with processing instructions, step 3.3, that indicate how to transform the text. These settings for the styling can include an identification of the font to be used, the line thickness of the font; the baseline shift of glyphs with respect to the baseline of text lines in the text document; the distance between text lines in said text document, or the colour of glyphs in the text document. The sender can also specify these properties in a degree of randomness or limits for the amount of variation of the settings. It is also possible that the sender specifies a pencil appearance of the glyphs, like a pencil, fountain pen, ball-point, fine-liner etc.

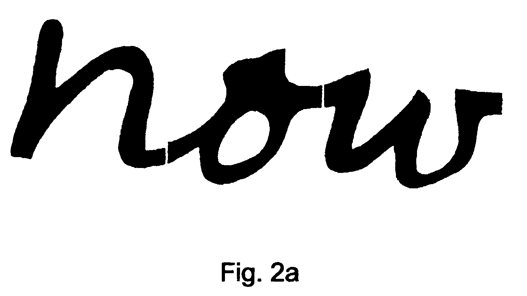

In the shown example the sender chooses a handwriting styled font, as shown in figure 1a, in order to give the message a hand-written appearance. In the shown example the sender applies hand-written style, context sensitive fonts as are described in United States Patent US 5412711. However it should be apparent that the invention can be applied to messages styled with any font type. After styling the text document has an internal configuration of three subsequent font elements as is shown in figure 2a. In commonly used font formats like the True Type format used in Microsoft Windows or Adobe Postscript fonts, the font outlines are mathematically described by a so called Bezier spline. This enables scaling of the fonts to different sizes, which can be required by the sender in his processing instructions.

After the server application has received the processing instructions from the sender, the application transforms the text document into a graphic document by selecting for each character of the text document a matching glyph from the selected font type, and changes the appearance of the font when required by the processing instructions, see step 3.4.

Optionally, additional graphic information can be added to the graphic document, such as picture elements, logo's, letter heads etc. In particularly additional graphic information that is inputted by the user by means of a graphic tablet, stylus input device or the like, such as a drawing, additional text, or a signature can be added.

The graphic document may be of any suitable kind. The graphic document may have a mathematically described or vector defined format, such as Encapsulated Postscript (EPS) or Scaleable Vector Graphics (SVG) or a bitmap graphics format, such as the Windows Bitmap (BMP) format. If the document is compressed, for example if the document is in Graphics Interchange Format (GIF), Joint Photographic Experts Group (JPEG), or Portable Network Graphics (PNG) format, the bit size of the graphic document is reduced, whereby for example an email containing the document is sent in much shorter time frame.

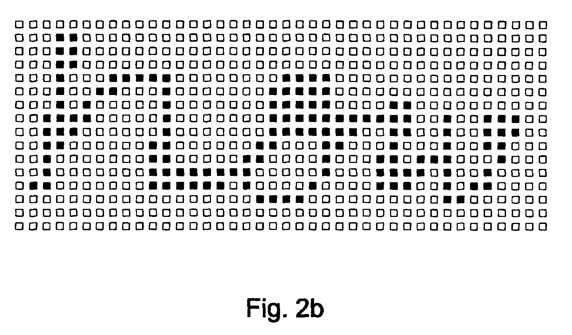

In the shown example the styled text document is a BMP document. The graphics document has the appearance similar to that shown in figure 1b, but has an internal configuration as shown in figure 2b. After conversion the message, as the graphic document, can be transmitted to for example a recipient via email, back to the sender for further processing (for example inclusion in the Internet homepage of the sender) or directly printed as a paper letter.

It should be noted that it is not necessary to perform the styling after creating the text document, but it is equally possible to perform the styling during creation of the text document itself. It should also be noted that styling can also be applied at the client computer system of the sender. This however requires the provision of the fonts to the client computer system.

With the described method, a single message can be converted in a single graphic document, but it is also possible to convert a single text document into a multiple of graphic documents, with one or more fonts, for example for direct mailing purposes. Also it is possible to convert a number of text documents into a multiple of graphic documents, for example if an assurance company wants to send a message with a hand-written appearance in the name of a myriad of agents, where a different font is used for each agent.

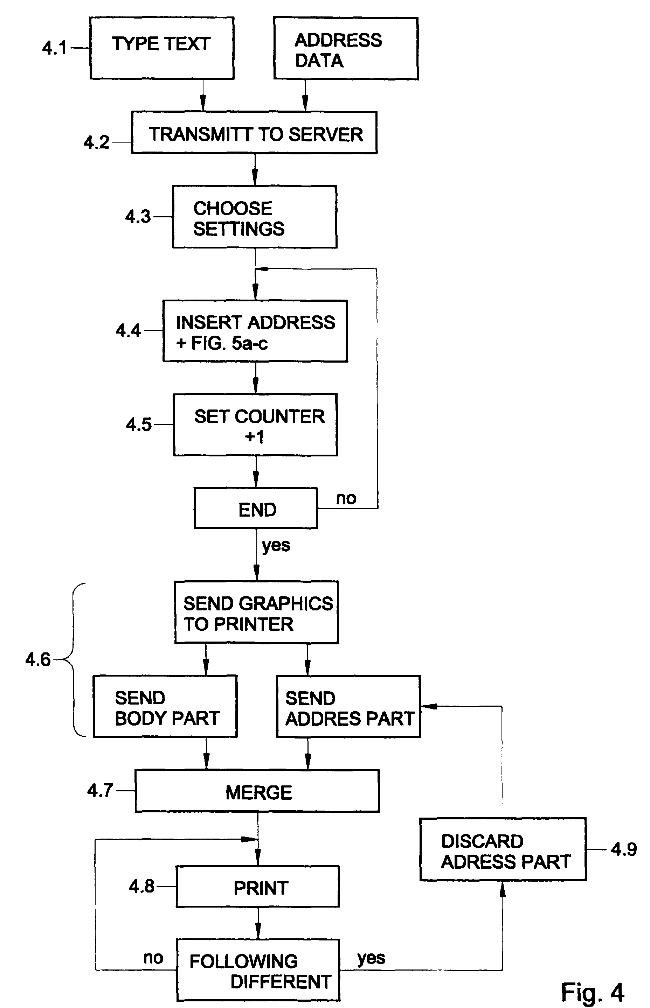

Fig. 4 shows a particularly advantageous example method according to the invention, which solves an extra problem.

It is known for direct mailing purposes to create a text document on a computer system with a fixed part and a variable part. In the following example embodiment the fixed part is a body part of a letter and the variable part an address part of that letter. The address part does not contain names or addresses as such, but an indication or mark-up of an address field. After creation of the text document, a mail merge command is given to the server computer system and a number of messages with the same body but different address parts are created, whereby the address fields are filled with fields from a database. In such way a number of messages with personalised names and addresses is created. However, the messages may use different fonts, whereby batch printing of the messages is complicated since each message requires loading in the printer of the used fonts and reformatting the message. It is even possible that the entire message has to be reloaded if the formatting commands are intertwined with the content of the message. If however, the method of figure 4 is used, only an address part has to be loaded in the printer for each differing message and no formatting or styling has to be applied in the printer, whereby batch printing is simplified.

In the method shown in fig. 4, on a client computer system a mother text document is created containing a body part and some address parts in step 4.1. These address parts have a mark-up indicating an address field type. Together with a database file containing for example names and addresses of intended recipients of the messages the mother text document is sent to a server system in step 4.2. The sender provides in step 4.3 the server system with settings similar to the settings chosen in step 3.3. Note that this settings also can include font selection parameters, that select a font for each document. The fonts are stored in a database on the server system. Alternatively, the font can be stored in a database on an other system that is communicatively connected to the server system.

At the server system in step 4.4 the mother text document is combined with the address and names, corresponding to the address field type, styled with a font as is described above and converted to graphic documents, resulting in a multiple of child graphic documents with personalised address fields. It is also possible to combine the mother message with the address fields in such way that a separate child graphic body part and child graphic address parts are obtained. For each message created in this way a counter value is increased in step 4.5, hereby enabling automatic billing of the sender for each merged message.

If the last message is processed, the child graphic documents resulting from the messages are sent in step 4.6 to the printer. The child body part is sent and a first child address part are transmitted separately or at the same moment to the printer system. At the printer body part and the address part are merged in step 4.7 into the child graphic document and the document is printed in step 4.8. If the following child graphic document contains a similar address part the printing step 4.8 is repeated.

Whenever the following graphic document differs in the address part from the graphic document, the address part already transmitted to the printer system is discarded in step 4.9 and steps 4.6-4.8 are repeated. A new address part corresponding to the following graphic document is transmitted step 4.6 to the printer system. Again, the body part in said printer system and this new address part are merged in step 4.7 into the following graphic document and printed in step 4.8. Hereby printing of the graphic documents is simplified since loading and formatting of the documents for each differing document is circumvented and only different graphics documents have to be merged.

This method is especially advantageous if the connection of the printer system to the server system is of a small capacity since the address parts are in general of a small bit size whereas the body part is usually substantially larger than the address parts.

It should be apparent that other methods similar to the method shown in fig. 4 are possible, for example each child graphic document can be sent in a single part to the printer, printed and discarded from the printer system. This is especially advantageous if the server computer systems has a connection to the printer system of a large bandwidth and the printer system has a slow merging system or is not capable of merging graphic documents at all.

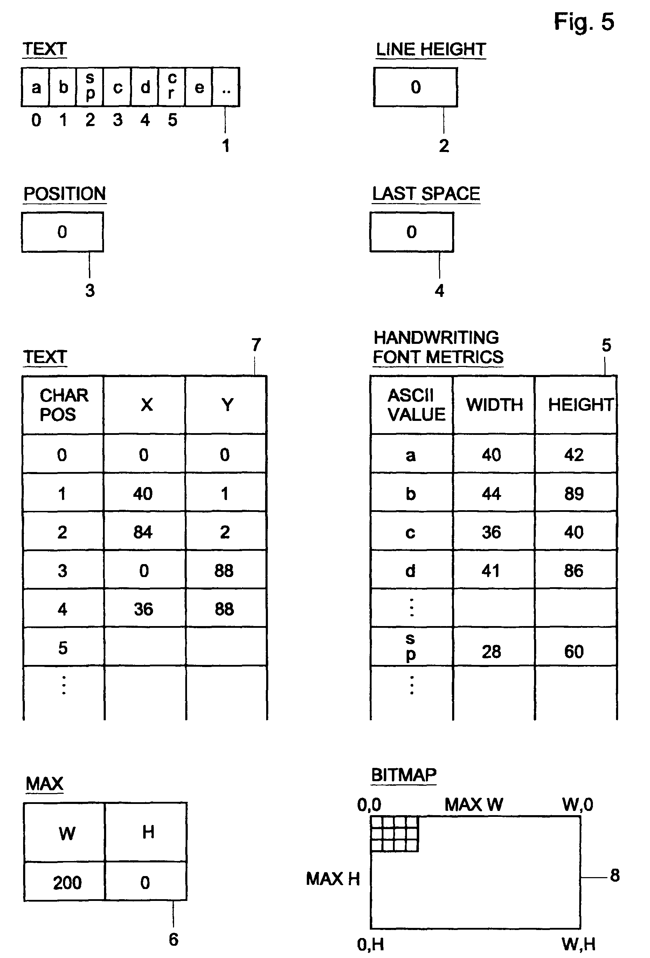

Referring to fig. 5, the glyphs of the characters defining the font to be used in the message are represented by parameters which are stored in data structures such as memory registers. For example, the text, which can be an alpha-numeric alphabet and symbols in a language, is stored in memory register 1 at numbered positions shown as positions 0 through 5 which appear under the box marked "text" in fig. 5. For example, the letter "a" appears at position 0, the letter "b" appears at position 1 and a "space" appears at position 2. Similarly, parameters for the "position", "last space" and "line height" have memory allocations in registers 3, 4 and 2, respectively. Each of these parameters may be defined by a single byte represented in fig. 5 as a zero. Other parameters include handwriting font metrics stored in register 5. Register 5 in fig. 5 is a table that contains in one column the ASCII values of the characters to be used in the font. Two other columns labelled "Width" and "Height" contain metric values defining the width and height parameters for each of the ASCII values for the particular font employed. Maximum values for these metrics are shown in register 6. In register 7, the character position is correlated to a bitmap which includes "x" and "y" co-ordinates as shown in register 8. For example, character position "0" corresponds to the bitmap location x=0 and y=0. Character position "1" corresponds to the bitmap location x=40 y=0. In this way, a collection of bitmap characters having predetermined handwriting font metrics are stored in memory and may be used in conjunction with the method to be described herein to assemble these characters into a message which can be transmitted as a graphic image through conventional e-mail and appear to the recipient in a stylised font.

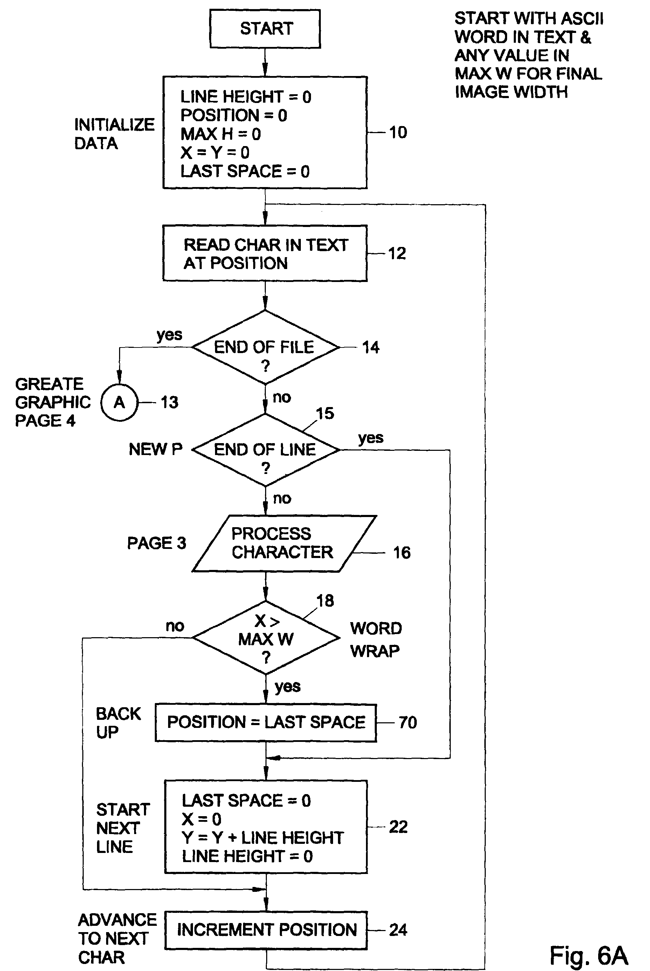

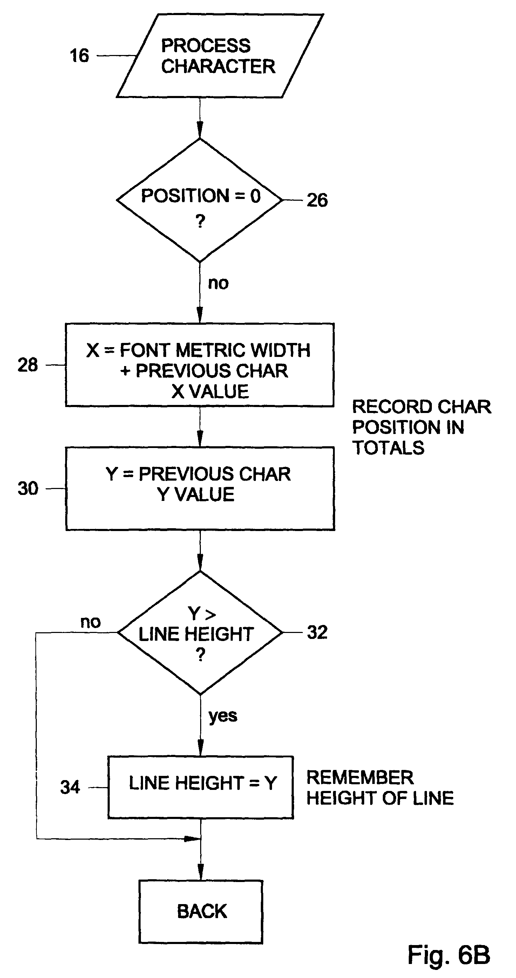

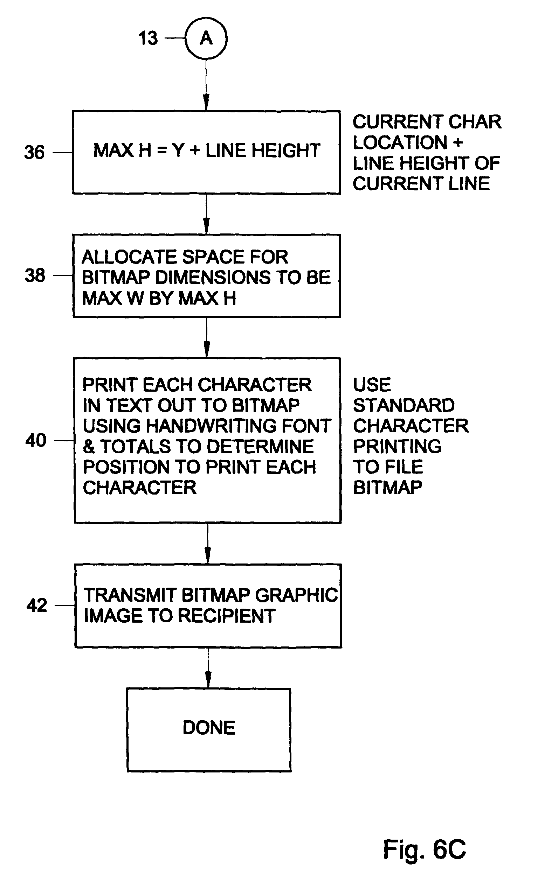

Referring to fig. 6a, the method of the invention, which may be implemented by software installed on a general purpose computer, starts with an ASCII word in text and any value in maximum width for a final image width. When the data is initialised, block 10, the line height position, maximum height and the x-y co-ordinates and the last space are all made equal to zero. The program then reads the character in the text at the first position indicated, block 12. If the character is neither the end of the file (block 14) nor the end of the line, block 15, the character is processed according to the program shown in fig. 6b, block 16. If the character is the end of the file at block 14, a graphic image is created according to the program of fig 6c via branch 13. If the character is the end of the line, block 18, the program jumps to start the next line at block 22. After this step, the position is incremented at block 24 and the program loops back to block 12. In fig 6b, block 16, the position of the character is determined (block 26). If the position is not zero, "x" is made equal to the font metric width plus the previous character "x" value (block 28). "Y" is then made equal to the previous character "y" value (block 30). The line height is then adjusted, block 32, stored in memory, block 34, and the program loops back to a decision node labelled "wordwrap", block 18 in fig. 6a. "Wordwrap" performs a back-up function if necessary (block 20) and then starts the next line at block 22. After this function, the position is incremented and the program loops back to the instruction block entitled "read character in text at position." When the end of the file is reached at the decision node labelled "end of file," (block 14) the program creates a graphic image according to the subroutine "A", block 13, of fig. 6c. First the maximum height of the line is adjusted, block 36. The program then allocates space for the bitmap dimensions to be maximum width by maximum height, block 38. Next, each character in the text is printed using the handwriting font and the totals of Table 7 of fig. 5 to determine the position to print each character, block 40. Once this bitmap has been assembled, the bitmap graphic image is transmitted to the recipient via e-mail, block 42. Other electronic transmission media may be used as the method of the invention is not limited to email. Electronic fax, transmission as an attachment to email, HTML (Hyper Text Mark-up Language), WAP (Wireless Application Protocol) and streaming media transmission may also be used.

It should be apparent that the invention is not limited to a method but also relates to a computer system arrange for application of the method and a computer program containing code parts enabling to apply the invention when the computer program is ran on a computer system. It should also be apparent that the invention is especially not limited to the described example embodiments.

## Claims

1. System for creating a message, comprising
input means for receiving text type documents comprising characters and font type parameters,
output means for outputting graphic documents,
characterised by
transformation means provided with a memory in which memory are stored glyphs of at least one font type, said transformation means being communicatively connected to said input means and said output means, wherein said transformation means transforms a text type document received from said input means into a graphic document by replacing each character from said text type document by a corresponding glyph of said at least one font type.

2. System according to claim 1, wherein said output means is provided with communication means to transmit a graphic document to a recipient.

3. System according to claim 2, wherein said communication means comprises an email application.

4. System according to claim 2, wherein said communication means comprises a printer server application.

5. System according to any of the preceding claims, wherein said input means is implemented on a client computer system.

6. System according to any of the preceding claims, wherein said transformation means is implemented on a server computer system.

7. System according to any of the preceding claims, wherein said output means is implemented on a server computer system.

8. System according to any of the preceding claims, wherein said at least one font type is a handwriting style font, and said transformation means transforms said corresponding glyphs to form in said graphic document a text image with a hand written visual appearance.

9. System according to claim 8, wherein said transformation means is arranged to transforms said glyphs context dependent.

10. System according to any of the preceding claims, wherein said transformation means is arranged to transform said text type document into a graphic document of a bit map format.

11. System according to any of the preceding claims, wherein said transformation means is arranged to transform said text type document into a graphic document of a mathematically described format.

12. A method for creating a graphic document from a text type document, comprising
storing a font comprising glyphs,
characterised by
reading said text type document character by character,
forming a graphic document by retrieving for each character read of said text type document a with said character corresponding glyph of said stored font.

13. A method according to claim 12, further comprising
assigning data parameters representing glyph characteristics to each character in the font and storing said data parameters in conjunction with said font.

14. A method according to claim 12 of 13, further comprising
storing said glyphs in a bit map format, and
forming said graphic document in a bit map format.

15. A method according to any one of claim 12-14, further comprising
storing said glyphs in a mathematically described format, and
forming said graphic document in a mathematically described format.

16. A method as claimed in any of the claims 12-15, further comprising storing said font on a server computer,
composing said text type document on a client computer system,
transmitting said text document by said client computer system to said server computer, and
forming said graphic document on said server computer.

17. A method as claimed in any of the claims 12-16, further comprising adding additional graphic information to said graphic document.

18. A method according to claim 17, wherein said additional graphic information contains address variable information.

19. Computer program for running on a computer system, characterised in that the computer programs contains code portions for performing steps of the method as is claimed in any of the claims 12-18 when run on a computer system.

20. A method of creating a graphic document from a text message written in a stylised font comprising the steps of defining the font as a set of glyphs, creating a graphic image from combinations of glyphs comprising the message and transmitting the graphic image to a recipient.
